**Europäisches Patentamt**

**European Patent Office**

**Office européen des brevets**

(19)

(11) Veröffentlichungsnummer: **0 016 258**
**B1**

(12)

# EUROPÄISCHE PATENTSCHRIFT

(45) Veröffentlichungstag der Patentschrift:
**14.03.84**

(51) Int. Cl.³: **H 02 B 1/16,** H 01 R 4/64

(21) Anmeldenummer: **79105118.8**

(22) Anmeldetag: **12.12.79**

(54) **Erdungskontaktierung für eine geklebte Eckverbindung von Hohlrohrrahmengestellen.**

(30) Priorität: **26.03.79 DE 2911847**

(43) Veröffentlichungstag der Anmeldung:
**01.10.80 Patentblatt 80/20**

(45) Bekanntmachung des Hinweises auf die Patenterteilung:
**14.03.84 Patentblatt 84/11**

(84) Benannte Vertragsstaaten:
**AT BE CH FR IT NL**

(56) Entgegenhaltungen:
**US - A - 1 885 227**
**US - A - 3 594 490**

(73) Patentinhaber: **SIEMENS AKTIENGESELLSCHAFT,**
**Berlin und München Wittelsbacherplatz 2,**
**D-8000 München 2 (DE)**

(72) Erfinder: **Kerscher, Franz, Böcklerweg 13,**
**D-8000 München 82 (DE)**
Erfinder: **Voigt, Ulrich, Dipl.-Ing., Unertlstrasse 31,**
**D-8000 München 40 (DE)**

Erdungskontaktierung für eine geklebte Eckverbindung von Hohlrohrrahmengestellen

Die Erfindung betrifft eine Erdungskontaktierung für eine mit einem Eckknoten versehene geklebte Eckverbindung eines Hohlrohrrahmengestelles für die elektrische Nachrichten-, insbesondere Datenverarbeitungstechnik. Solche Erdungskontaktierungen sind bekannt.

Bei Hohlrohrrahmengestellen zum Aufbau für Schrankgerüste zur Aufnahme von Baueinheiten, insbesondere der Datenverarbeitungstechnik, werden die drei an einer Ecke zusammenlaufenden Hohlrohre mit Hilfe eines z. B. aus Aluminium gefertigten Eckknotens verbunden. Die Fixierung erfolgt dabei mit Hilfe eines Klebers, der von außen in die Verbindungsfugen eingespritzt wird.

Dabei zeigt sich, daß der Kleber die einzelnen Teile an einer Ecke unter Umständen sehr gut isoliert bzw. es ist keine sichere elektrische Verbindung vorhanden.

Aufgabe der vorliegenden Erfindung ist es, eine sichere elektrische Verbindung der drei Rohre untereinander zu schaffen.

Zur Lösung dieser Aufgabe wird die Erdungskontaktierung gemäß der Erfindung derart ausgebildet, daß an mindestens einer der durch drei zusammentreffende Hohlrohre gebildeten Innenecke eines Hohlrohrrahmengestells eine Gewindebuchse angeordnet ist und daß eine in der Gewindebuchse geführte Schraube eine Metallscheibe oder ein ähnliches bereits vorgeformtes Teil beim Anziehen der Schraube so fest in diese Innenecke hineinpreßt, daß sich die Metallscheibe verformt und dabei die Korrosionsschutzschicht auf der Oberfläche der Hohlrohre durchbricht.

Durch diese Maßnahmen erhält man eine Erdverbindung, die ohne Schweißen hergestellt werden kann, so daß die beim Schweißvorgang mit verzinkten Rohren entstehenden giftigen Gase nicht entstehen können. Außerdem ist die Erdverbindung relativ leicht herzustellen. Zugleich erhält man einen sehr niedrigen Kopplungswiderstand für die HF-Abschirmung.

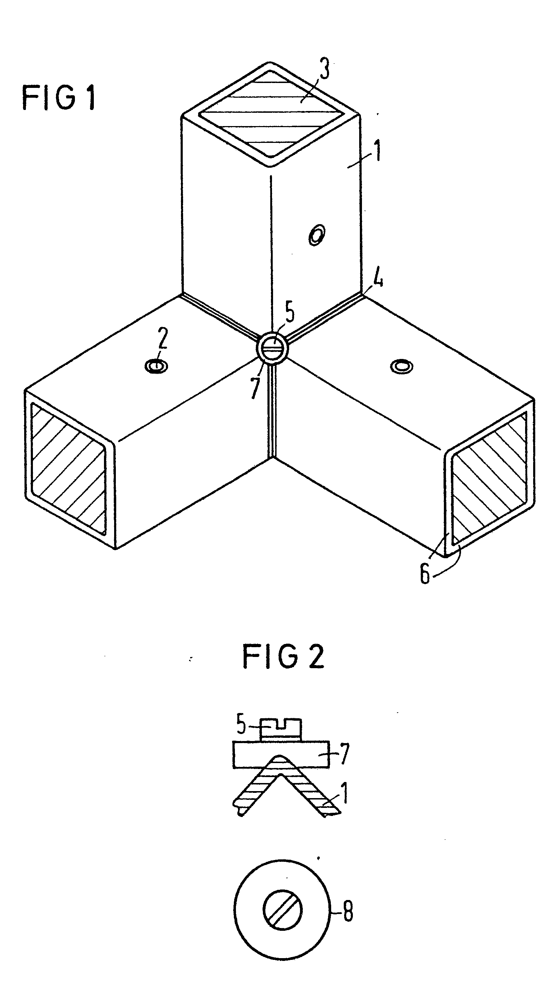

Anhand der Ausführungsbeispiele nach den Fig. 1 und 2 wird die Erfindung näher erläutert.

Fig. 1 zeigt eine perspektivische Darstellung einer aus Vierkantrohren, z. B. aus Aluminium, bestehenden Ecke eines Hohlrohrrahmengestelles.

Fig. 2 zeigt eine Skizze hierzu.

Die drei Vierkantrohre nach Fig. 1 treffen sich in einem Eckpunkt und werden mit Hilfe eines sogenannten Eckknotens 3, der in die Vierkantrohre 1 eingeführt wird, miteinander verklebt. Um Kleberaustritt zu verhindern, ist in jedem Vierkantrohr eine Dichtung 4 vorgesehen, die über den sogenannten Eckknoten gestreift wird. Zwischen den Eckknoten und den Vierkantrohren besteht ein Klebespalt 6 zur Aufnahme des Klebers. Der Kleber selbst wird in den Klebereinfüllöffnungen 2 zugeführt.

Der Eckknoten ist mit einer Gewindebuchse versehen, die genau dort angeordnet ist, wo die Ecken der drei Vierkantrohre zusammentreffen.

Über diesen drei Kanten der Rohre wird mit einer Metallscheibe 7 und einer Senkschraube eine elektrische Verbindung hergestellt. Die 3-Punkt-Auflage an den Rohrkanten stellt eine statisch bestimmte Anlage dar. Die Scheibe hat keine Senkung und wird beim Anziehen der Schraube verformt und paßt sich daher sowohl in der Senkung als auch an den Rohrkanten flächig an. Die Erdungsschraube wird nach dem Aushärten der Klebeverbindung angezogen; damit ist sichergestellt, daß kein Verzug auf das Gerüst übertragen wird.

Die nichtleitende Korrosionsschutzschicht der Rohroberfläche (verzinkt, chromatiert) wird mit den Scheiben-Kanten sicher durchbrochen.

Anstelle der Scheiben können auch vorgeformte Teile verwendet werden, welche die Kontaktfläche vergrößern könnten, z. B. geprägte Blechscheiben, mit Zink-Druckguß gefertigte Elemente in Wellfederform.

Ferner können noch zusätzliche Zahnscheiben unter dem Schraubenkopf die Wirkung erhöhen.

Ein seitlicher Schnitt durch die Erdungskontaktierung, sowie eine Draufsicht sind in der Fig. 2 dargestellt. Die Metallscheibe 7 drückt sich beim Anziehen der Schraube 5 in die Kante des Vierkantrohres hinein und durchbricht dabei, wie bereits beschrieben, die nichtleitende Chromatschicht. Die Rohrkanten 8 treffen dabei in einem Winkel von 120° aufeinander.

**Patentanspruch**

Erdungskontaktierung für eine mit einem Eckknoten versehene geklebte Eckverbindung eines Hohlrohrrahmengestelles für die elektrische Nachrichten-, insbesondere Datenverarbeitungstechnik, dadurch gekennzeichnet, daß an mindestens einer der durch drei zusammentreffende Hohlrohre (1) gebildeten Innenecke des Hohlrohrrahmengestells eine Gewindebuchse angeordnet ist und daß eine in der Gewindebuchse geführte Schraube (5) eine Metallscheibe (7) oder ein ähnliches bereits vorgeformtes Teil beim Anziehen der Schraube (5) so fest in diese Innenecke hineinpreßt, daß sich die Metallscheibe (7) verformt und dabei die Korrosionsschutzschicht auf der Oberfläche der Hohlrohre (1) durchbricht.

**Claim**

An earthing contact for a glued corner connection, provided with a corner junction, of a hollow tubular frame for elctrical communications, in particular data processing, technology, characterised in that at least at one of the inner angles of the hollow tubular frame, which is formed by the junction of three hollow tubes (1), there is arranged a threaded bush, and that a screw (5), which is guided in the threaded bush, presses a metal disc (7), or similar pre-formed component, into the inner angle on tightening the screw (5) to an extent such that the metal disc (7) is deformed and thereby penetrates the corrosion-protective layer on the surface of the hollow tubes (1).

**Revendication**

Connexion de mise à la terre pour un raccord d'angle collé, muni d'un nœud d'angle, d'un bâti tubulaire pour la technique électrique des communications, notamment pour la technique du traitement des données, caractérisée par le fait qu'une douille taraudée est disposée dans au moins l'un des angles intérieurs du cadre tubulaire, formé par trois tubes (1) concourants, et qu'une vis (5) guidée dans la douille taraudée repousse suffisamment fermement dans cet angle intérieur un disque métallique (7) ou une pièce analogue déjà préformée, lors du serrage de la vis (5) pour que le disque métallique (7) se déforme et que la couche de protection contre la corrosion située sur la surface des tubes (1) se rompe.

FIG 1

FIG 2